# EUROPEAN PATENT SPECIFICATION

(11) **EP 3 707 114 B1**
(45) Date of publication and mention of the grant of the patent: **01.05.2024**
(21) Application number: 18845442.5
(22) Date of filing: 09.11.2018
(51) Int. Cl.: C05F 11/02, A01G 24/00, C05F 7/00

(54) **METHOD FOR RECULTIVATION OF DEGRADED AREAS**
VERFAHREN ZUR REKULTIVIERUNG VON DEGRADIERTEN GEBIETEN
PROCÉDÉ DE REMISE EN CULTURE DE ZONES DÉGRADÉES

(30) Priority: 09.11.2017 HU 1700451
(43) Date of publication of application: 16.09.2020
(73) Proprietor: Észak-dunántúli Hulladékhasznosító Kft., 9400 Sopron (HU)
(72) Inventor: HORVÁTH, Sándor, 8000 Székesfehérvár (HU); HEIL, Bálint Gábor, 9400 Sopron (HU); KOVÁCS, Gábor, 6320 Solt (HU); KLING, István, 1122 Budapest (HU); KLING, Júlia, 1122 Budapest (HU)
(74) Representative: Kereszty, Marcell
(86) International application number: PCT/HU2018/000047
(87) International publication number: WO 2019/092465

(56) References cited:
- WO-A1-2007/111479
- DE-A1- 3 803 282
- DE-C1- 4 327 831
- US-A- 5 853 450
- DATABASE BIOSIS [Online] BIOSCIENCES INFORMATION SERVICE, PHILADELPHIA, PA, US; June 2017 (2017-06), MILLER VALERIE S ET AL: "Amendments and substrates to develop anthroposols for northern mine reclamation", Database accession no. PREV201700617864 & CANADIAN JOURNAL OF SOIL SCIENCE, vol. 97, no. 2, June 2017 (2017-06), pages 266-277, ISSN: 0008-4271(print), DOI: 10.1139/CJSS-2016-0145

## Description

### TECHNICAL FIELD

The invention relates to a method for recultivation of degraded areas.

It is a serious environmental problem nowadays that all over the world there are large substantially degraded areas vis-à-vis normal conditions as a result of some kind of economic activity, for example open-pit mining. The natural recovery of these areas until they become fertile again is an extremely slow process, taking several centuries or even millennia. According to estimates, in certain countries the ratio of degraded areas unsuitable for cultivation may even reach 3 to 5% of the relevant country's territory.

Furthermore, another environmental problem is the increasing quantity of communal wastewater, as a result of social economic life and development. The volume of wastewater sludge resulting from the treatment of usually concentrated wastewater may even amount to 250,000 tonnes of dry matter annually, subject to the use of sewers, in a country of ten million. The disposal and treatment of such a wastewater volume are only partly provided for by the currently available technologies.

### BACKGROUND ART

EP 0 558 784 A1 describes a method whereby the heavy metal content of wastewater sludge is removed, and then the so treated wastewater sludge is used in the recultivation of wasteland, and especially in that of mining areas and refuse dumps. In the course of this process, the treated wastewater sludge is spread and used in the manuring of fast growing vegetation. This plant, which is preferably Miscanthus Sinensis (Chinese silver grass) is ground, ensilated, and then incinerated to generate power and to dry the wastewater sludge. A disadvantage of the method is that wastewater sludge can only provide a topsoil of up to 1 meter thickness, which is not sufficient for long-term plant cultivation or for example for the purpose of growing trees, in addition to the fact that by using wastewater sludge only, a topsoil forming the basis for a steady ecological system cannot be established.

EP 0 536 716 A1 describes a method relating to the recultivation of an industrially or agriculturally undisturbed land. In the course of this process, additives (e.g. enzymes, bacteria, etc.) are mixed into the dried wastewater sludge, and then this humus-like mixture is spread across the land, with fast growing plants (biomass) being grown in the area. During the recultivation process, a multilayer soil structure is established. It is a disadvantage of this approach, too, that by means of simply spreading a soil substitute, a soil medium of appropriate depth cannot be created, nor is the raw material of the land to be recultivated utilised.

US 5,249,889 describes a method involving the filling up of the degraded land by a mixture including waste materials, for example water treatment lime sludge, ash, and crushed concrete waste. For stabilising the soil, a woven geo-textile mat is placed over the mixture, followed by the layering of yard waste or compost in a 15 to 30 cm thickness thereon, to support the growth of vegetation on the land. It is a disadvantage of this solution that a compost layer of 15 to 30 cm thickness does not provide a topsoil of sufficient thickness, and therefore a steady ecological system cannot be established in the area or it takes a very long time to do so. Furthermore, this approach does not utilise the raw material of the degraded land either.

EP 3037 184 A1 describes another recultivation method, preferably for road construction sites. During the process, sewage sludge with 20% dry mass content, ash from biomass combustion and shales obtained from bituminous coal mining are mixed in the weight ratio of 3 : 2 : 10 and filling the top layer of excavation in a thickness of 0.5 to 2.5 meters. The so created soil-like layer will even allow the planting of grass or trees. The disadvantage of this solution is that it uses, instead of the soil of the land to be recultivated, materials from coal mining to create a soil substitute, which entails transport costs, and thereby imposes a higher pollution burden on the environment.

RU 2 655 548 C1 presents a method for the recultivation of an open-pit mine. In this process, first the hydrological regions of the soil are restored, during which the mine cavity is filled up with water-bearing rock that does not harm the water resources, and then an impervious layer of 0.8 to 1.0 meter thickness is created from clay and/or by compacting household or industrial waste. In the next step, hazardous waste of class IV or class V is deposited, again sealed by an impervious clay layer. For the vegetation, wastewater sludge, animal waste, slag and ash are layered, and then covered by fertile soil. The disadvantage of this method is that the vegetation is planted in fertile soil transported from a different place to the recultivation site, instead of using materials available on the spot. Therefore, the wastewater sludge used in the process and other non-hazardous wastes containing materials useful for the plants are not utilised by this method, they only have a space filling purpose.

US 2018/0208518 A1 describes a recultivation method which involves the preparation of the degraded land, followed by sowing a mixture containing the seeds of ligneous plants or trees there. This process is also suitable for the reforestation of a land. The mixture containing the seeds may consist of organic topsoil materials, manure with minerals, water, as well as optionally a microbial population, glue or absorbent polymers. The pre-treatment of the degraded soil may be performed, for example, with organic biomass, which can be ash, sludge, manure, compost, wood or grass, and furthermore the seed mixture and/or the pre-treatment medium can be mixed with the degraded soil. The mixture containing the seeds may only be mixed into the surface of the degraded soil, and this is a disadvantage of the approach, as the seeds are unable to come up for example from a depth of one meter.

WO 2007/111479 A1, DE 4327831 C1, DE 3803282 A1, US 5,853,450 and Valerie S. Miller et al. "Amendments and substrates to develop anthroposols for northern mine reclamation", Canadian Journal of Soil Science, Vol. 97:2 (2017) also disclose the general background art of recultivation or soil substitute making methods.

### DESCRIPTION OF THE INVENTION

In view of the prior art approaches and problems, there is a need for a method which involves the simultaneous performing of the recultivation activity and the wastewater sludge treatment, and which comprises the creation of a soil substitute which functions similarly to natural ecological systems.

The object of the approach according to the invention is the elaboration of a recultivation method and system which are exempt, as much as possible, from the disadvantages of prior art solutions.

The primary object of the invention is the establishing of a recultivation method which efficiently allows the creation of a soil substitute by using the structural material of degraded areas.

A further object of the invention is to create, during the recultivation process, a soil substitute of suitable depth which functions similarly to the natural ecological systems and which is also suitable for planting vegetation preferably comprising trees.

Another object of the invention is to treat and utilise communal wastewater sludge in the course of the recultivation process, simultaneously with recultivation.

The objects identified in relation to the invention have been met by means of the recultivation method described in claim 1. Preferred embodiments of the invention are identified in the dependent claims.

It is an advantage of the approach used in the invention that as a result of the recultivation method, a new surface is generated instead of the earlier degraded surface, the soil substitute of which functions as a soil system of high water holding capacity with a high humus and nutrient content within a short time in comparison with other methods (approximately 2 to 3 years). Similarly to naturally established fertile soils, the newly established soil substitute meets the requirements of soils suitable for vegetation.

A further advantage of the invention is that the method offers a solution for utilising communal wastewater sludge from wastewater treatment plants, and other biodegradable wastes. Instead of the quick disintegration of organic materials present in wastewater sludge and in the utilised biological wastes, it becomes possible to retain them in a much higher ratio by means of a stabilisation occurring as a result of creating organic mineral complexes that prevent the disintegration of organic materials. By making it possible to create vegetation for generating power on the soil substitute established by the method, both the high water content of the wastewater sludge from the treatment plants and the mineral nutrients present in biological wastes and suitable for utilisation by the plants after mineralisation are utilised. During the energetic use of the plants growing on this substitute soil, the pathogen microbes, drugs or chemical residues do not get into the food chain, i.e. they do not represent a biological risk to the general public. Furthermore, the vegetation also contributes to binding a large quantity of carbon-dioxide and to generating oxygen.

It is an advantage of the invention also that, unlike incineration generally applied for decontaminating wastewater sludge, it utilises the organic material content of wastewater sludge, while avoiding a substantial carbon-dioxide emission resulting from incineration. It is also an advantage that regarding the disposal of wastewater sludge, the method offers an outstandingly favourable way of space utilisation in comparison with prior art approaches.

It is also a benefit of the invention that, unlike earlier technologies, it does not necessitate the transporting/moving of humus or other topsoil created or produced in a place other than the recultivation site, thereby achieving significant cost saving in the implementation of recultivation, and also avoiding environmental burdens resulting from transport.

It is also one of the advantages of the invention that, unlike prior art recultivation methods, a much deeper - even several meter deep - soil substitute can be established, and thereby a vegetation representing a steadier than earlier ecological system is created on the soil substitute.

### BRIEF DESCRIPTION OF THE DRAWINGS

The preferred embodiments of the invention will be illustrated hereinafter by way of example in the following drawings, where
Fig. 1 is the block diagram of the method embodying the invention,
Fig. 2 is the schematic view of a preferred embodiment of the recultivation system embodying the invention,
Fig. 3 is the schematic view of another preferred embodiment of the recultivation system embodying the invention and comprising a mixing bed,
Fig. 4A is the cross sectional view of a horizontally layered mixing bed,
Fig. 4B is the cross sectional view of a conical shell layered mixing bed,
Fig. 4C is the top view of two mixing beds arranged in parallel,
Fig. 4D is the top view of two mixing beds arranged in series,
Fig. 5 is the schematic view of a third preferred embodiment of the recultivation system according to the invention,
Fig 6 is the cross sectional view of a volumetric feeder, and
Fig. 7 is the cross sectional view of a two-axle mixer.

### EMBODIMENTS OF THE INVENTION

Through the recultivation method, a soil substitute is created on a degraded area by utilising a communal wastewater sludge from wastewater treatment plants. Then, vegetation is preferably planted on the soil substitute and the vegetation is utilized.

Degraded areas are among others anthropogenic barren soils currently unsuitable for cultivation, like waste land, areas eroded down to the bedrock, open-pit coal, gravel or sand mines, quarries or other mineral mines, their surroundings and refuse dumps. The soil, mineral bedrock or ballast rock (in short: structural material) making up the surface of these areas would not be able to produce a fertile soil medium in themselves or only in a very long time (decades or centuries), but they are suitable for application in a soil substitute. It is characteristic of the structural material of these areas that it has an extremely low direct nutrient supply capacity, and it does not have necessary qualities evolving during the natural pedogenesis of fertile soils, i.e. it does not have, for example, a steady pore structure or soil structure, and it does not comprise soil biota which make the soils fertile.

By this recultivation method, not only the structural material of degraded areas, but also - as organic biological material - communal wastewater sludge and other organic biological wastes are utilised.

Communal wastewater sludge is the largest quantity waste produced by wastewater treatment, and it is generated as a solid-phase secondary material during the treatment of wastewater. Due to interactions with the technological system of the liquid phase, the treatment of this material cannot be separated therefrom, and represents an integral unit therewith. Wastewater sludge produced in communal wastewater treatment procedures is not to be considered as a hazardous waste, but especially because of its components, it is a by-product that can be utilised in certain limited ways. It is suitable for the replacement or substitution of primary materials or with an appropriate intervention for that of energy sources (nutrients, various fuels, electric power, etc.). The composition of wastewater sludge varieties depends on the place of origin and the treatment technology, but they have a common characteristic: a high moisture content. A large part of wastewater sludge comes from the typical treatment and processing plants in a spongy shovellable condition, and the moisture content is around 78 to 82% on average. However, wastewater treatment plants also produce a significant volume of liquid-phase wastewater sludge, which has a higher water content of 92 to 94%.

Other biological organic waste can be the mostly organic waste or biomass produced for example in agriculture or forestry, and also in food industry. Such a waste can be, for example, compost of a quality unsuitable for agricultural use, and biological waste which can be considered to be solid after going through preparation phases, for example wood chips, foliage from parks, etc. These non-hazardous waste materials of biological origin can be returned and utilised almost fully in the biological cycle.

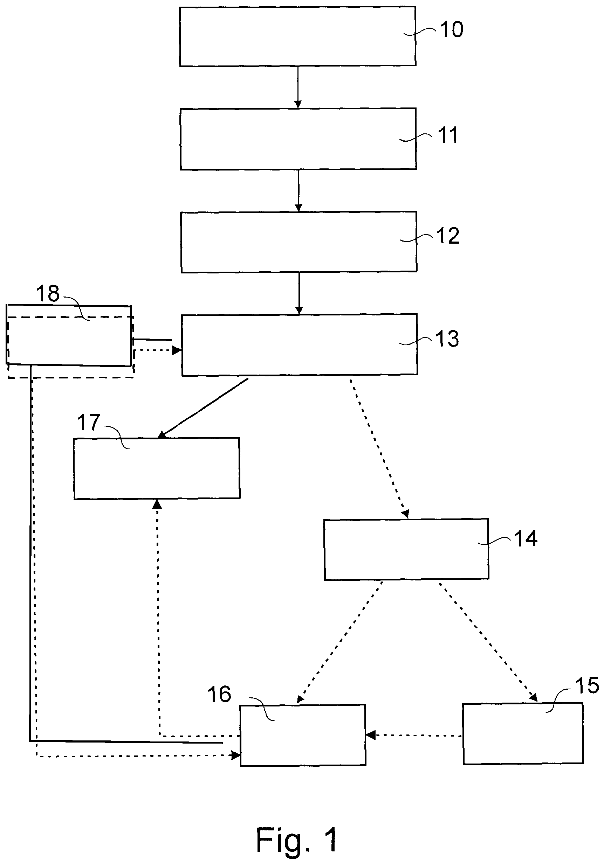

The steps of the method involved in the recultivation of degraded areas according to the invention are shown in the block diagram of Fig. 1. The method is based on the simultaneous utilisation of the structural material of degraded areas and of biological type organic materials. Dotted arrows in the figure show the steps of the method that may be taken in relation to the ex situ embodiment.

In a material receiving step 10 of the recultivation method, the base materials to be used for creating the soil substitute and not originating from the degraded areas are transported to the recultivation site. During the receiving and treatment of base materials, material conveyance is preferably kept minimal in order to ensure cost saving and to create an appropriate geomorphologic feature of the degraded area.

The base materials received in the material receiving step 10 and the base materials, including the structural material of the degraded area, already present on the degraded area are examined in an examination step 11, i.e. a composition of a structural material of the degraded area and a dry matter content of the wastewater sludge are determined. Preferably, in the examination step 11, the available quantity and other characteristics of the base materials are also identified, and even more preferably the examination step 11 is supplemented with a pedological and soil conservation expert appraisal, which also includes a laboratory analysis and monitoring of the base materials.

The following may also be part of the examination step 11:
- detailed examination of the wastewater sludge in accordance with an applicable national standard;
- surveying the geological, hydrological and geomorphological conditions of the degraded area;
- determining the character of the degraded area and that of the mineral deposit,
- determining the mechanical characteristics of the material of the degraded area;
- determining the granulometric composition;
- determining the microbial community composition of the fertile soils established naturally in areas surrounding the degraded area; and/or
- determining the layer thickness of the soil substitute to be created.

On the basis of the values identified in the examination step 11, the quantity of base materials to be used in creating the soil substitute is determined.

For creating the soil substitute, in the measuring step 12 measuring out such a quantity of a biological type organic material containing the wastewater sludge to the structural material of the degraded area that the ratio of these base materials is the following in the soil substitute in percent by weight (wt%) relating to the dry matter content of the base materials:
- 50 to 70 wt% structural material originating from the degraded area, and
- 30 to 50 wt% biological type organic material, of which at least two-third is the wastewater sludge and the remaining part of which is other biological organic waste.

The soil substitute composition ratio applied in the measuring step 12 is preferably determined by making use of the results of the examination step 11, for example in view of the type and components of the structural material and the nutrient content of the wastewater sludge.

To create the soil substitute, the following base materials can be used by way of example in dry matter content related percent by weight.

### Example 1

- 70 wt% structural material,
- 20 wt% wastewater sludge, and
- 10 wt% other biological organic waste.

### Example 2

- 50 wt% structural material,
- 40 wt% wastewater sludge, and
- 10 wt% other biological organic waste.

### Example 3

- 70 wt% structural material, and
- 30 wt% wastewater sludge.

The base materials of the soil substitute are mixed and homogenised in a mixing step 13, thereby creating the soil substitute. Preferably, a soil substitute of a thickness of at least 2 meters is created, which serves as a suitable soil not only for herbaceous, but also for arboreal plants. In the course of producing the soil substitute, the mixing/homogenising of base materials are to be carried out to such an extent that the initially large differences in composition and characteristics can be equalised as quickly as possible.

In mixing step 13, mixing with excessively high moisture content is to be avoided, because it may lead to compacting. The continuous elimination of any compacting can be achieved by keeping the soil substitute and its base materials constantly in motion.

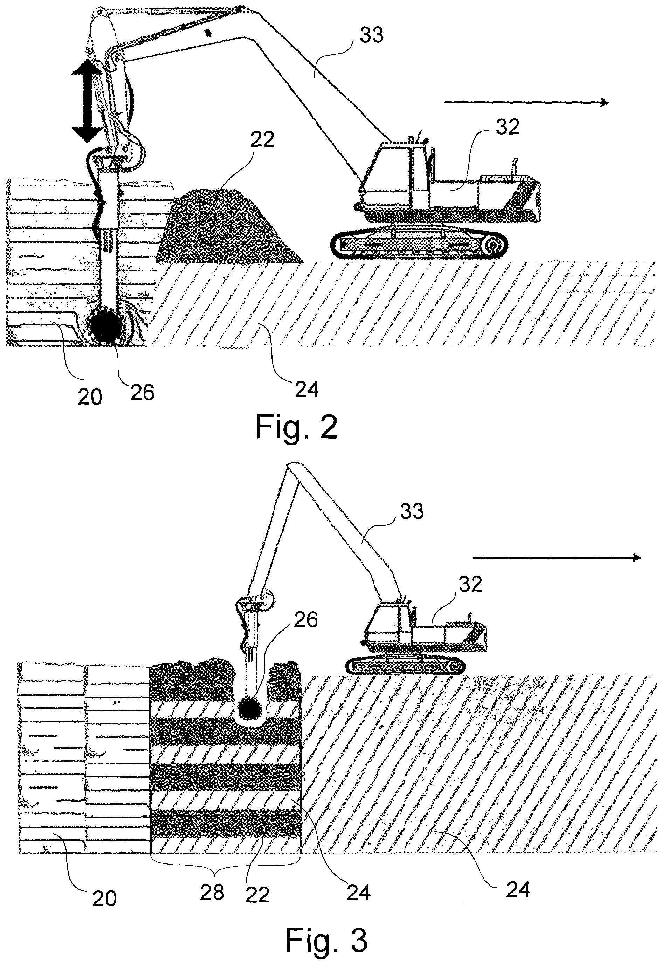

Figs. 2, 3 and 5 depict preferred embodiment examples for executing the measuring step 12 and the mixing step 13.

The measuring step 12 and the mixing step 13 may also be optionally performed in a place other than the degraded area, for example where there is no or only limited access to the degraded area. In such a case, after the mixing step 13, the created soil substitute is transported in a transportation step 14 to a provisional depot or directly to the degraded area, i.e. the recultivation site, where the soil substitute is deposited in a depositing step 16. A provisional depot can be, for example, an ageing (maturing) site and/or a waste disposal site, where in a storing step 15 the soil substitute is stored, and from where the soil substitute can be transported to the recultivation site and deposited in the depositing step 16. In cases when the measuring step 12 and the mixing step 13 are not performed on the degraded area, all the base materials of the soil substitute and therefore also the structural material of the degraded area must be transported in the measuring step 12 to one place, and then the mixed and homogenised soil substitute is to be taken to the recultivation site and/or to a provisional depot, which entails an increase in transport costs.

The method is preferably supplemented by the examination of the created soil substitute, which examination is preferably and advisably performed by means of examination methods laid down in the applicable standards for pedological surveys in order to ensure the appropriate quality of the created soil substitute. The preferred parameters of the created soil substitute are summarised in Table 1. The created soil substitute must preferably meet the parameters identified in Table 1 preferably one year after the mixing step 13. The data of Table 1 have been determined in harmony with national regulations used by way of example, in spite of the fact that the scope of the regulations used by way of example does not cover areas withdrawn from cultivation and/or degraded areas, but even when creating vegetation utilised purely for generating power it is advantageous to meet these stricter limit values. The preliminary examination of the base materials of the soil substitute in the examination step 11 ensures that the created soil substitute meets the parameters outlined in Table 1. In case it is determined that a certain parameter of the created soil substitute does not satisfy the quality requirements, the subsequent correction of the ratios of base materials must be carried out.

**Table 1: Quality requirements imposed on the soil substitute (preferably one year after the mixing step 13).**

| parameter | preferred value range |
|---|---|
| water pH rate | 6.5-9.0 |
| total salt content | 0 - 0.25 wt% |
| humus content | 0.5 - 25 wt% |
| phenolphthalein alkalinity (the quantity of 0.1 M hydrochloric acid solution or 0.05 M sulphuric acid solution in ml, required for the neutralisation of 100 ml material) | 0-0.10% |
| exchangeable sodium content in a percentage of the S-rate (the quantity of all exchangeable strong base alkaline cations) | 0-25 % |
| CaCOs content | 0 - 20 wt% |

The space utilisation of the method according to the invention can be enhanced if the soil substitute is not created in one step and in one layer, but in several repeated steps in several layers arranged one above the other. In such a way, the thickness of the soil substitute created on the degraded area may also be increased. A new soil substitute layer can be deposited on the already existing soil substitute preferably every 3 to 7 years in a given area. When executing the depositing process in a layer by layer fashion, it is to be ensured that the crusting of the surface is avoided. Furthermore, the method is preferably supplemented by the landscaping of the degraded area, which means that the new surface created by using the soil substitute is matched to the natural environment.

The method comprises an additional microbiological treatment step 18 for the microbiological treatment of the soil substitute, which may be performed during the mixing step 13 or in connection with the depositing step 16. The microbiological treatment step 18 consists of a series of the following tasks:
- taking a soil sample from a fertile soil (sampling area) established by natural pedogenesis (soil generation processes) close to the degraded area,
- isolating of a starter culture from the soil sample,
- culturing, enriching and fermenting the isolated starter culture, and
- inoculating of the soil substitute with the fermented starter culture.

By means of the microbiological treatment step 18, adjusting the microbiological composition of the soil substitute can be facilitated.

The following two detailed examples will demonstrate the execution of the microbiological treatment step 18.

Example 4: Microbiological treatment step 18 using the *Bacillus* genus.

### - Sampling:

The sampling is carried out by using the square or cross method, either of which is a suitable approach.

In the case of the square method, a 10×10 meter square is marked in the sampling area. At each corner of the marked square, and at the intersection point of the diagonals, a mixed soil sample is taken from a depth of approx. 0 to 60cm.

In the case of the cross method, a 10×10 meter cross is marked in the sampling area, and in the centre and at the end points of the cross, a soil sample is taken from a depth of approx. 0 to 60 cm.

At the sampling points marked by the square or cross method, a mixed soil sample is taken by an auger, and the soil samples are taken to a laboratory as soon as possible for the purpose of culturing.

### - Isolating:

Aerobic spore-forming bacteria of the *Bacillus* genus are isolated from the soil sample, and nutrient agar is applied for the isolation.

In the laboratory, the soil samples are poured into Erlenmeyer flasks of appropriate sizes, and then sterile physiological solution is added to amply cover the soil samples. The so made bacterial suspension is thoroughly shaken in the flasks, and after incubation at 22°C during the night, a cell spreader is used to spread around 1 ml of bacterial suspension on each nutrient agar plate. The plates are subjected to incubation at room temperature for 2-3 days.

### - Culturing, enriching, fermenting:

For enriching the isolated starter culture, a nutrient broth, and for growing bacteria *en masse,* a molasses broth is used.

In the course of making a pure culture, aerobic spore-forming *Bacillus* genus bacterial colonies are spread around some more. One isolated colony from each pure culture is further inoculated into 5 ml nutrient broth each, and they are incubated at room temperature for one or two days.

During the enrichment, several vessels containing 100 ml nutrient broth are inoculated with 1 ml culture, and then further incubated at room temperature.

After the incubation of the enriched culture, culture vessels (pilot biofermentors) containing 10 litre molasses broth are inoculated, with the appropriate mixing and aeration provided for. Using the content of the biofermentors, the required area can be inoculated after a one- or two-week fermentation period.

### - Inoculation:

In the course of inoculation, inoculation points are marked on the surface of the soil substitute, using the square or cross method already described in relation to sampling. Depending on the size of the area, several inoculation points can be marked, preferably by the repeated application of the square or cross method. At the marked inoculation points, 0 to 10 cm deep, preferably 10 cm deep and approximately 1 to 2 cm diameter holes are drilled, and then 10 ml of fermentation liquid is poured into each hole.

### Example 5: Microbiological treatment step 18 through the use of nitrification bacteria

### - Sampling:

The sampling is carried out by using the square or cross method, either of which is an equally suitable approach.

In the case of the square method, a square of 10×10 meter size is marked in the sampling area. A mixed soil sample is taken at each corner of the marked square and at the intersection point of the diagonals from a depth of approx. 0 to 60 cm.

In the case of the cross method, a 10×10 meter cross is marked in the sampling area, and in the centre and at the end points of the cross, a soil sample is taken from a depth of approx. 0 to 60 cm.

At the sampling points marked by the square or cross method, a mixed soil sample is taken by an auger, and the soil samples are taken to a laboratory as soon as possible for the purpose of culturing.

### - Isolation:

Nitrification bacteria of the *Nitrosomonas* genus and/or the *Nitrobacter* genus are isolated from the soil sample.

For isolating the bacteria of the *Nitrosomonas* genus, Stephenson's *Nitrosomonas* liquid medium, while for the isolation of *Nitrobacter,* Stephenson's *Nitrobacter* liquid medium is applied.

In the laboratory, 20 g of each soil sample is poured into an Erlenmeyer flask of appropriate size, and 200 ml sterile Stephenson's *Nitrosomonas* liquid medium is added to the soil sample in one flask, and 200 ml sterile Stephenson's *Nitrobacter* liquid medium is added in the other flask. Incubation is carried out at room temperature for five days, and then by using a cell spreader, 1 ml is spread around on each of the 2x3 Stephenson's *Nitrosomonas* and Stephenson's *Nitrobacter* silica gel plates. The plates are incubated at room temperature under aerobic conditions for 5 to 10 days.

### - Culturing, enrichment, fermentation:

The colonies characterising the *Nitrosomonas* and *Nitrobacter* bacteria are further spread around in order to obtain a pure culture. An isolated colony from each pure culture is further inoculated into 5 ml *Nitrosomonas* and *Nitrobacter* broth each, respectively, and they are incubated at room temperature for one or two weeks.

In the course of the enrichment, from the culture incubated previously, several vessels containing 100 ml *Nitrosomonas* and *Nitrobacter* broth are inoculated, and this inoculation is carried out with 1 ml culture each.

After the incubation of the enriched culture, two culture vessels (pilot biofermentors), one containing 10 litres of *Nitrosomonas* broth, the other 10 litres of *Nitrobacter* broth, are inoculated, ensuring their appropriate mixing and aeration. The required area can be inoculated with the content of biofermentors after fermenting for 2 to 3 weeks.

### - Inoculation:

During inoculation, inoculation points are marked on the surface of the soil substitute, using the square or cross method already described in relation to sampling. Depending on the size of the area, several inoculation points may be designated, preferably by the repeated application of the square or cross method. At the specified inoculation points, holes of 0 to 10 cm depth, preferably 10 cm depth, and approximately 1-2 cm dia. are drilled, and then 10 ml of fermentation liquid is poured into each.

Covering the soil substitute with vegetation is carried out in a planting step 17, during which preferably at least one of the following species is used for growing the vegetation:
- Siberian elm (*Ulmus pumila*),
- Field (English) elm (*Ulmus minor*),
- Canadian poplar clones (*Populus × euramericana*),
- Willow clones (*Salix* spp.),
- European ash (*Fraxinus excelsior*),
- Acacia (*Robinia pseudoacacia*),
- Field maple (*Acer campestre*),
- Russian olive (*Elaeagnus angustifolia*),
- Paulownia clones (*Paulownia sp*.),
- Virginia-mallow (*Sida hermaphrodita L. Rusby*),
- Giant Chinese silver grass (*Miscanthus giganteus*)*.*

In order to avoid erosion, it is advisable to grow vegetation on the soil substitute as soon as possible. Covering with vegetation must first be executed preferably by using high water use herbaceous plants, for example Virginia-mallow and giant Chinese silver grass, and then after approximately 2 to 3 years, it is advisable to plant ligneous plants into the soil which has been created in the meantime from the soil substitute. During these 2 to 3 years, appropriate pedogenesis takes place in the soil substitute, thanks to the mixing and homogenisation of the base materials and to the evolving of organic mineral complexes. The soil so created is a proper source of water and nutrients for the vegetation.

The plants grown in the planting step 17 are preferably utilised for producing green energy, e.g. biomass.

Fig. 2 depicts a preferred embodiment of a system implementing the recultivation method shown in Fig. 1. In this preferred embodiment it is not necessary to transfer the structural material 24 of the degraded area for the creation of the soil substitute 20, but in the measuring step 12 it is sufficient to spread on the degraded area the wastewater sludge 22 containing a biological type organic material in an amount matching the specified mixing ratio. In this embodiment, in the measuring step 12, shovellable wastewater sludge as a preferably biological type organic material has been used, i.e. spread on the degraded area. This wastewater sludge preferably contains no less than 10% dry matter and even more preferably no less than 18 to 22% dry matter. This type of wastewater sludge 22 spreads on its own on the area after measuring, thus typically a layer of no more than approx. 1 m thickness can be established through the use of this wastewater sludge 22. In the mixing step 13, the wastewater sludge 22 is mixed into the structural material 24 by means of the vertically downwards facing and rotating mixing head 26 coupled to the operating arm 33 of the earthwork equipment 32. The earthwork equipment 32 is preferably supplied with wheels and/or a caterpillar to be able to move on the structural material 24 of the degraded area. The earthwork equipment 32 preferably moves the mixing head 26 in a vertical direction, to mix the wastewater sludge 22 into the structural material 24, and the thickness of the soil substitute 20 being created is provided by the vertical displacement of the mixing head 26 of the earthwork equipment 32. When the earthwork equipment 32 moves in the direction shown by an arrow in Fig. 2, the total quantity of the wastewater sludge 22 measured in the measuring step 12 is mixed into the structural material 24.

Preferably excavators designed for loosening and breaking up hard materials, for example rock, bitumen, concrete, or frozen ground may be applied as the mixing head 26. The driving of the mixing head 26 is preferably provided by the hydraulic system of the earthwork equipment 32. The mixing head 26 is preferably fitted with appropriate mixing blades and/or mixing edges corresponding to the structural material 24 (for example, rock, sand, clay, gravel, sandstone, etc.) of the degraded area. The capacity of the mixing head 26, and the size, shape and/or tilting angle of the mixing blades and/or mixing edges of the mixing head 26 are controlled.

In the mixing step 13, the mixing head 26 is moved vertically, preferably down to a depth of 2 meter at most, to mix the base materials of the soil substitute 20. Due to the spreading of wastewater sludge 22, by means of the system shown in Fig. 2, preferably a soil substitute 20 of up to 2 meter thickness can be created, and therefore this system can be preferably applied in such degraded areas, where due to the terrain conditions, for example hydrogeography, the soil substitute 20 of up to 2 meter thickness may be created, and/or where the vegetation to be grown does not require a soil thicker than 2 meters.

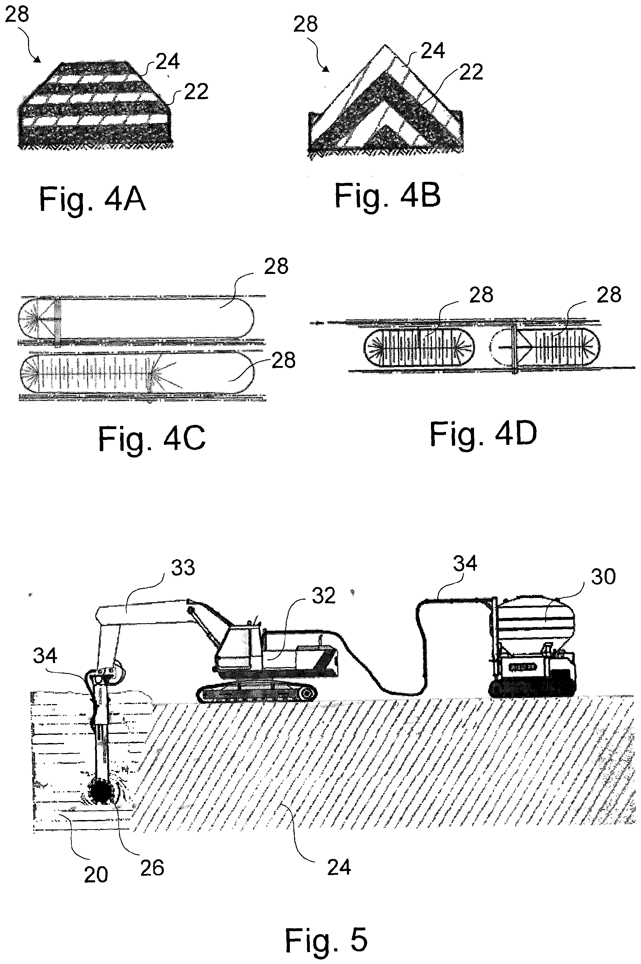

Fig. 3 shows another preferred embodiment of the system relating to the implementation of the recultivation method according to Fig. 1. In this case at least one mixing bed 28 is applied in the degraded area. The mixing bed 28 is a temporary depot or storage area, wherein the materials of the soil substitute 20 are measured in a determined form and sequence. The base materials of the soil substitute 20, i.e. the structural material 24 of the degraded area and the biological type organic material containing the wastewater sludge 22 are measured out into the mixing bed 28 layer by layer in the measuring step 12. Regarding the possible layering methods, examples are shown in Figs. 4A and 4B.

The base materials measured out into the mixing bed 28, in the preferred embodiment shown in Fig. 3 the structural material 24 of the degraded area and the wastewater sludge 22, preferably the wastewater sludge 22 having no less than 18 to 20% dry matter content, are mixed in the mixing step 13 down to the full depth of the mixing bed 28, thus the thickness of the soil substitute 20 is determined by the depth of the mixing bed 28. The mixing is preferably carried out by the vertically downwards facing and rotating mixing head 26, which is coupled to the operating arm 33 of the earthwork equipment 32. In this case, the mixing head 26 is also driven by the hydraulic system of the earthwork equipment 32 and the mixing head 26 is preferably fitted with mixing blades and/or mixing edges corresponding to the structural material 24 (e.g. rock, sand, clay, gravel, sandstone, etc.) of the degraded area. The capacity of the mixing head 26 and the size, shape and/or tilting angle of the mixing blades and/or mixing edges of the mixing head 26 are also controlled in this preferred embodiment.

To ensure continuous material receiving and mixing preferably at least two mixing beds 28 are applied that are preferably arranged side by side. While the mixing step 13 takes place in the mixing bed 28, the base materials can be continuously measured into the other mixing bed 28. The capacity of the mixing beds 28 is preferably in the 500 to 2000-ton magnitude. The mixing beds 28 are transferred in accordance with the direction of operation after the completion of the mixing and homogenising process. In relation to the size and arrangement of the mixing beds 28, the size of the available area and the terrain conditions of the degraded area, for example the physical geography and geographic structure of the area, are to be taken into consideration. Considering these parameters, it is advisable to apply the largest possible mixing bed 28. By using large size mixing beds 28 changes in the materials within the area - for example changes in the composition of the structural material 24 - can be equalised in the mixing step 13, which facilitates natural equalisation, and thereby a homogenous soil substitute 20 is established. To facilitate equalisation decreasing layer thickness of base materials and/or increasing number of layers in the mixing beds 28 can be applied.

When at least two mixing beds 28 are used, preferred arrangements of the mixing beds 28 are shown in Figs. 4C and 4D.

By applying the mixing beds 28 according to Fig. 3, preferably the soil substitute 20 of up to 5 meters of magnitude can be established, and even more preferably the soil substitute 20 of 2 - 5-meter thickness, which is suitable for growing vegetation consisting of ligneous plants, especially trees with large roots.

Fig. 4A depicts an example of a preferred layering method of the mixing bed 28 of the preferred system shown in Fig. 3. The mixing bed 28 shown in Fig. 4A has a horizontal layering, i.e. the base materials of the soil substitute 20 are stacked one above the other in horizontal layers. In the preferred arrangement of the figure, the mixing bed 28 contains the wastewater sludge 22 and the structural material 24 layers alternatingly with the number of layers being seven.

Fig. 4B shows another preferred layering method of the mixing bed 28. In this arrangement, the base materials of the soil substitute 20 are layered on one another in the form of a conical shell, and the base materials are preferably measured from a position above the centre of the mixing bed 28 and then guided into the mixing bed 28, and after measuring it is not necessary to level the layers. In the arrangement of Fig. 4B, the mixing bed 28 contains the wastewater sludge 22 and the structural material 24 layers alternatingly with the number of layers being four.

Figs. 4C and 4D show top views of preferred arrangements of the two mixing beds 28 related to each other. In the preferred arrangement shown in Fig. 4C, the mixing beds 28 are arranged parallel to each other, i.e. the longer sides of the mixing beds 28 are located side by side. The preferred direction of operation is shown by an arrow in the figure. Optionally, three or more mixing beds 28 may be arranged parallel one after another.

In the preferred arrangement shown in Fig. 4D, the mixing beds 28 are arranged in sequence, i.e. the shorter sides of the mixing beds 28 located side by side. The preferred direction of operation is shown by an arrow in the figure. If required, more than two mixing beds 28 may be arranged one after another.

Fig. 5 depicts a third preferred embodiment of the system implementing the recultivation method in accordance with Fig. 1. This system preferably implements a method utilising liquid wastewater sludge 22 with high moisture content. The liquid wastewater sludge 22 of up to 10% dry matter content is measured into the feeding equipment 30 in the measuring step 12.

In the mixing step 13, the structural material 24 of the degraded area is mixed and loosened by the vertically downwards facing and rotating mixing head 26, and the liquid wastewater sludge 22 is transferred from the feeding equipment 30 through or to the mixing head 26 coupled to the operating arm 33 of the earthwork equipment 32, and there the liquid wastewater sludge 22 is mixed with the loosened structural material 24 of the degraded area. Even in this case, the mixing head 26 is preferably moved in a vertical direction during the mixing step 13 (vertical mixing). The system shown in Fig. 5 has the advantage that transferring the structural material 24 in order to create the soil substitute 20 is not necessary.

The feeding equipment 30 is preferably a high-pressure feeding equipment 30, which transfers the liquid wastewater sludge 22 towards the earthwork equipment 32 by compressed air through pipe 34 located preferably above the surface. The feeding equipment 30 is preferably located on a remote controlled caterpillar frame, which enables the feeding equipment 30 to follow the movement of the earthwork equipment 32 on the degraded area.

By means of the system in Fig. 5, the soil substitute 20 of preferably up to 5 m thickness can be created.

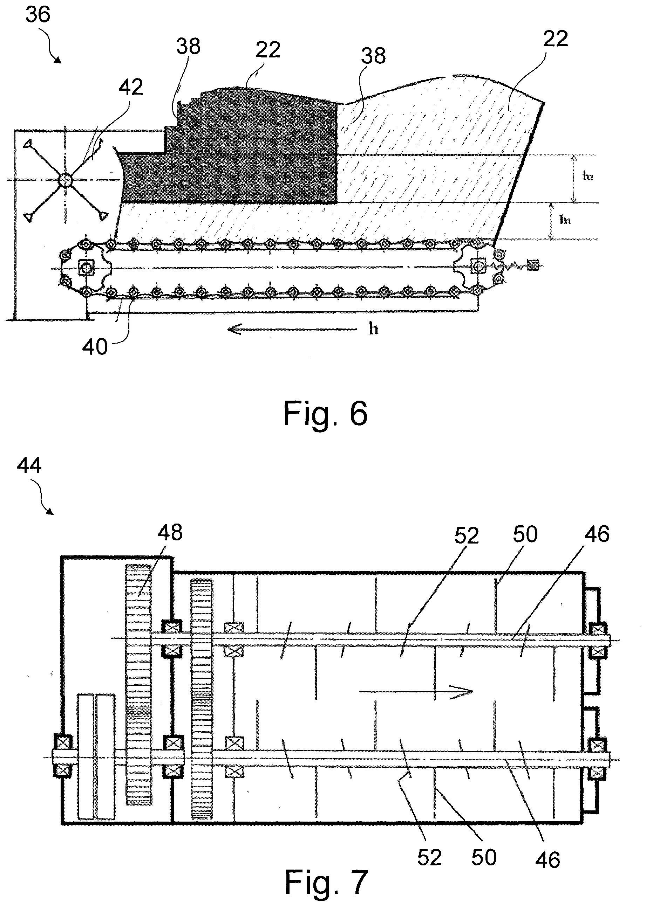

If the terrain conditions of the degraded area do not allow directly establishing of the soil substitute 20 on site and/or it is justified to pre-treat, e.g. to mix certain base materials of the soil substitute 20 in advance, then to homogenise the soil substitute 20 and/or to mix certain base materials especially the structural material 24, preferably a volumetric feeder 36 depicted in Fig. 6 can be applied. The volumetric feeder 36 is preferably equipped with control elements 38, by which the composition ratios of materials measured into the volumetric feeder 36 can be regulated by adjusting the thicknesses h1, h2 of the various layers. In the case of multiple layers, the application of multiple control elements 38 is required. The transportation of base materials in the volumetric feeder 36 is preferably supported by a plate conveyor 40 and even more preferably by a ribbed plate conveyor 40. The mixing of the base materials is performed by a paddle 42, preferably a multiblade paddle 42, which besides breaking up the eventually occurring lumps in the base materials, also provides a steady material flow.

Upstream of the volumetric feeder 36, preferably crushing, breaking and/or grinding equipment can be connected, which break the base materials of the soil substitute 20 into smaller pieces, thereby achieving better homogeneity of the base materials at the outlet of the volumetric feeder 36. As crushing, breaking and/or grinding equipment, equipment such as clay and mass preparation equipment applied in the brick and tile industry can be used.

Downstream of the volumetric feeder 36, preferably an axle-type mixer 44, or more preferably a two-axle mixer 44 may also be connected to mix the base materials of the soil substitute 20 even more homogenously. Fig. 7 shows the cross-sectional view of a two-axle mixer 44, which has two axles 46 preferably rotating in opposite directions. The axles 46 are driven by driving unit 48. Straight mixing elements 50 and tilted mixing elements 52 are connected to the axles 46. The tilting angle of the tilted mixing elements 52 can be adjusted, and thereby the period and efficiency of the mixing process can be regulated.

The method of industrial applicability of the invention follows from the type of approach described above. As shown above, the invention achieves the specified goal extremely favourably when compared to prior art solutions. The invention is of course not limited to the preferred embodiments demonstrated in details, but further versions, modifications and further developments are possible within the range of protection identified by the claims.

### Legends

- 10: material receiving step
- 11: examination step
- 12: measuring step
- 13: mixing step
- 14: transportation step
- 15: storing step
- 16: depositing step
- 17: planting step
- 18: microbiological treatment step
- 20: soil substitute
- 22: wastewater sludge
- 24: structural material
- 26: mixing head
- 28: mixing bed
- 30: (high-pressure) feeding equipment
- 32: earthwork equipment
- 33: operating arm
- 34: pipe
- 36: volumetric feeder
- 38: control elements
- 40: plate conveyor
- 42: paddle
- 44: mixer
- 46: axle
- 48: driving unit
- 50: straight mixing element
- 52: tilted mixing element

## Claims

1. A method for recultivation of degraded areas, comprising
- creating a soil substitute (20) on a degraded area by utilising a communal wastewater sludge (22) originating from wastewater treatment, the soil substitute (20) being suitable for growing vegetation,
- determining, in an examination step (11), a composition of a structural material (24) of the degraded area and a dry matter content of the wastewater sludge (22), wherein the structural material (24) is a barren soil, a mineral bedrock, or a ballast rock of the degraded area, and then
**characterised by**
- in a measuring step (12), for creating the soil substitute (20), measuring out such a quantity of a biological type organic material containing the wastewater sludge (22) to the structural material (24) of the degraded area, that the ratio of these base materials is the following in the soil substitute (20) in percent by weight (wt%) relating to the dry matter content of the base materials
- 50 to 70 wt% structural material (24) originating from the degraded area, and
- 30 to 50 wt% biological type organic material, of which at least two-third is the wastewater sludge (22) and the remaining part of which is other biological organic waste; and
- mixing the base materials in a mixing step (13)
- microbiologically treating the soil substitute, comprising the steps of
- taking a soil sample from a fertile soil established by natural pedogenesis close to the degraded area,
- isolating a starter culture from the soil sample,
- culturing, enriching and fermenting the isolated starter culture, and
- inoculating the soil substitute with the fermented starter culture.

2. The method according to claim 1, **characterised in that** in the measuring step (12) a wastewater sludge (22) of at least 10% dry matter content is spread out on the degraded area, and then in the mixing step (13), the biological type organic waste containing the wastewater sludge (22) is mixed into the structural material (24) of the degraded area.

3. The method according to claim 2, **characterised in that** in the mixing step (13) the base materials are mixed in a vertical direction preferably down to a depth of 2 meters.

4. The method according to claim 1, **characterised by** utilizing at least one mixing bed (28) on the degraded area, and in the measuring step (12) the base materials of the soil substitute (20) are measured out into the mixing bed (28) layer by layer, and then in the mixing step (13) the measured base materials are mixed down to the full depth of the mixing bed (28).

5. The method according to claim 4, **characterised in that** at least two mixing beds (28) are used, and the mixing beds (28) are arranged side by side.

6. The method according to claim 4 or claim 5, **characterised in that** in the mixing step (13) vertical mixing is applied to create the soil substitute (20) down to a depth of up to 5 meters.

7. The method according to any of claims 1 to 6, **characterised in that** during the measuring step (12) at least one base material of the soil substitute (20) is pre-treated and during this pre-treatment the base material(s) is (are) pre-mixed in a volumetric feeder (36).

8. The method according to claim 7, **characterised in that** a mixer (44), preferably a two-axle mixer (44), is coupled to the outlet of the volumetric feeder (36) and the base material of the soil substitute (20) is additionally further mixed by the mixer (44).

9. The method according to any of claims 1 to 8, **characterised in that** the mixing step (13) is carried out by a vertically downwards facing and rotating mixing head (26) coupled to an operating arm (33) of an earthwork equipment (32).

10. The method according to claim 1, **characterised in that** in the measuring step (12) a liquid wastewater sludge (22) of up to 10% dry matter content is measured into a feeding equipment (30), and then in the mixing step (13) the structural material (24) of the degraded area is loosened by means of a vertically downwards facing and rotating mixing head (26) coupled to an operating arm (33) of an earthwork equipment (32), the liquid wastewater sludge (22) is transferred from the feeding equipment (30) through or to the mixing head (26) and there the liquid wastewater sludge (22) is mixed with the loosened structural material (24).

11. The method according to claim 10, **characterised in that** in the mixing step (13), a soil substitute (20) of up to 5 meters depth is created by vertical mixing.

12. The method according to any of claims 1 to 11, **characterised by** growing a vegetation on the created soil substitute (20) by using at least one of the following species:
- Siberian elm (*Ulmus pumila*)*,*
- Field (English) elm (*Ulmus minor*),
- Canadian poplar clones (*Populus × euramericana*),
- Willow clones (*Salix* spp.),
- European ash (*Fraxinus excelsior*),
- Acacia (*Robinia pseudoacacia*),
- Field maple (*Acer campestre*),
- Russian olive (*Elaeagnus angustifolia*),
- Paulownia clones (*Paulownia sp.*)*,*
- Virginia-mallow (*Sida hermaphrodita L. Rusby*),
- Giant Chinese silver grass *(Miscanthus giganteus).*

## Patentansprüche

1. Verfahren zur Rekultivierung von degradierten Flächen, umfassend
- Erzeugen eines Bodenersatzstoffes (20) auf einer degradierten Fläche durch Verwendung eines aus der Abwasserbehandlung stammenden kommunalen Abwasserschlamms (22), wobei der Bodenersatzstoff (20) zum Anpflanzen von Vegetation geeignet ist,
- Ermitteln, in einem Untersuchungsschritt (11), einer Zusammensetzung eines Strukturmaterials (24) der degradierten Fläche und eines Trockensubstanzgehaltes des Abwasserschlamms (22), wobei das Strukturmaterial (24) ein unfruchtbarer Boden, ein mineralisches Grundgestein oder ein Schottergestein der degradierten Fläche ist, und dann,
**gekennzeichnet durch**
- in einem Messschritt (12), zum Erzeugen des Bodenersatzstoffes (20), Abmessen solch einer Menge eines den Abwasserschlamm (22) enthaltenden organischen Materials biologischer Art zu dem Strukturmaterial (24) der degradierten Fläche, dass der Anteil dieser Basismaterialien in dem Bodenersatzstoff (20) in Gewichtsprozent (Gew.-%) in Bezug auf den Trockensubstanzgehalt der Basismaterialien der folgende ist
- 50 bis 70 Gew.-% Strukturmaterial (24), das von der degradierten Fläche stammt, und
- 30 bis 50 Gew.-% organisches Material biologischer Art, von dem mindestens zwei Drittel der Abwasserschlamm (22) sind und der restliche Teil davon andere biologische organische Abfälle sind; und
- Mischen der Basismaterialien in einem Mischschritt (13),
- mikrobiologische Behandlung des Bodenersatzstoffes, umfassend die folgenden Schritte
- Entnehmen einer Bodenprobe aus einem **durch** natürliche Bodenbildung gebildeten fruchtbaren Boden in der Nähe der degradierten Fläche,
- Isolieren einer Starterkultur aus der Bodenprobe,
- Kultivieren, Anreichern und Fermentieren der isolierten Starterkultur, und
- Beimpfen des Bodenersatzstoffes mit der fermentierten Starterkultur.

2. Verfahren nach Anspruch 1, **dadurch gekennzeichnet, dass** in dem Messschritt (12) ein Abwasserschlamm (22) von mindestens 10 % Trockensubstanzgehalt auf der degradierten Fläche verteilt wird, und danach in dem Mischschritt (13) der den Abwasserschlamm (22) enthaltende organische Abfall biologischer Art in das Strukturmaterial (24) der degradierten Fläche gemischt wird.

3. Verfahren nach Anspruch 2, **dadurch gekennzeichnet, dass** in dem Mischschritt (13) die Basismaterialien in einer vertikalen Richtung, vorzugsweise bis zu einer Tiefe von 2 Metern, gemischt werden.

4. Verfahren nach Anspruch 1, **gekennzeichnet durch** Verwendung von mindestens einem Mischbett (28) auf der degradierten Fläche, und in dem Messschritt (12) werden die Basismaterialien des Bodenersatzstoffes (20) in das Mischbett (28) Schicht für Schicht abgemessen, und danach in dem Mischschritt (13) werden die abgemessenen Basismaterialien bis zur vollen Tiefe des Mischbetts (28) gemischt.

5. Verfahren nach Anspruch 4, **dadurch gekennzeichnet, dass** mindestens zwei Mischbetten (28) verwendet werden, und die Mischbetten (28) nebeneinander angeordnet werden.

6. Verfahren nach Anspruch 4 oder Anspruch 5, **dadurch gekennzeichnet, dass** in dem Mischschritt (13) vertikales Mischen angewendet wird, um den Bodenersatzstoff (20) herab zu einer Tiefe von bis zu 5 Metern zu erzeugen.

7. Verfahren nach einem der Ansprüche 1 bis 6, **dadurch gekennzeichnet, dass** während des Messschritts (12) mindestens ein Basismaterial des Bodenersatzstoffes (20) vorbehandelt wird und während dieser Vorbehandlung das/die Basismaterial(ien) in einer volumetrischen Beschickungsvorrichtung (36) vorgemischt wird/werden.

8. Verfahren nach Anspruch 7, **dadurch gekennzeichnet, dass** ein Mischer (44), vorzugsweise ein zweiachsiger Mischer (44), an den Auslass der volumetrischen Beschickungsvorrichtung (36) gekoppelt wird und das Basismaterial des Bodenersatzstoffes (20) zusätzlich weiter mit dem Mischer (44) gemischt wird.

9. Verfahren nach einem der Ansprüche 1 bis 8, **dadurch gekennzeichnet, dass** der Mischschritt (13) mit einem senkrecht nach unten ausgerichteten und rotierenden Mischkopf (26), der an einen Arbeitsarm (33) einer Ausrüstung für Erdarbeiten (32) gekoppelt ist, durchgeführt wird.

10. Verfahren nach Anspruch 1, **dadurch gekennzeichnet, dass** in dem Messschritt (12) ein flüssiger Abwasserschlamm (22) von bis zu 10 % Trockensubstanzgehalt in eine Beschickungsausrüstung (30) abgemessen wird, und danach in dem Mischschritt (13) das Strukturmaterial (24) der degradierten Fläche mithilfe eines senkrecht nach unten ausgerichteten und rotierenden Mischkopfes (26), der an einen Arbeitsarm (33) einer Ausrüstung für Erdarbeiten (32) gekoppelt ist, aufgelockert wird, der flüssige Abwasserschlamm (22) von der Beschickungsausrüstung (30) durch den oder zu dem Mischkopf (26) weitergeleitet wird und dort der flüssige Abwasserschlamm (22) mit dem aufgelockerten Strukturmaterial (24) gemischt wird.

11. Verfahren nach Anspruch 10, **dadurch gekennzeichnet, dass** in dem Mischschritt (13) ein Bodenersatzstoff (20) von bis zu 5 Metern Tiefe durch vertikales Mischen erzeugt wird.

12. Verfahren nach einem der Ansprüche 1 bis 11, **gekennzeichnet durch** Anpflanzen einer Vegetation auf dem erzeugten Bodenersatzstoff (20) **durch** Verwendung von mindestens einer der folgenden Spezies:
- Sibirische Ulme (*Ulmus pumila*),
- Feldulme (Englische Ulme) (*Ulmus minor*),
- Klone von Bastard-Schwarz-Pappel (*Populus × euramericana*),
- Klone von Weiden (*Salix* spp.),
- Gemeine Esche *(Fraxinus excelsior),*
- Akazie (*Robinia pseudoacacia*),
- Feldahorn (*Acer campestre*),
- Schmalblättrige Ölweide (*Elaeagnus angustifolia*)*,*
- Klone von Paulownie (*Paulownia sp.*),
- Virginia-Malve (*Sida hermaphrodita (L.) Rusby*),
- Riesen-Chinaschilf (*Miscanthus giganteus*).

## Revendications

1. Procédé de remise en culture de zones dégradées, comprenant les étapes :
- créer un substitut de sol (20) sur une zone dégradée par l'utilisation de boues des eaux usées communales (22) provenant d'un traitement des eaux usées, le substitut de sol (20) étant approprié pour la croissance de la végétation,
- déterminer, dans une étape d'examen (11), une composition d'une matière structurelle (24) de la zone dégradée et une teneur en matière sèche des boues des eaux usées (22), dans lequel la matière structurelle (24) est un sol aride, une roche-mère minérale, ou une roche de ballast de la zone dégradée, puis
**caractérisé par les étapes :**
- dans une étape de mesure (12), pour la création du substitut de sol (20), mesurer une quantité d'une matière organique de type biologique contenant les boues des eaux usées (22) sur la matière structurelle (24) de la zone dégradée, de sorte que le rapport de ces matières de base soit le suivant dans le substitut de sol (20) en pourcentage en poids (% poids) de la teneur en matière sèche des matières de base
- 50 à 70 % en poids de matière structurelle (24) provenant de la zone dégradée, et
- 30 à 50 % en poids de matières organiques de type biologique dont au moins deux tiers sont les boues des eaux usées (22) et dont la partie restante est d'autres déchets organiques biologiques ; et
- mélanger les matières de base dans une étape de mélange (13)
- traiter microbiologiquement le substitut de sol, comprenant les étapes consistant à
- prélever un échantillon de sol d'un sol fertile établi par une pédogénèse naturelle à proximité de la zone dégradée,
- isoler une culture de départ de l'échantillon de sol,
- cultiver, enrichir et fermenter la culture de départ isolée, et
- inoculer le substitut de sol avec la culture de départ fermentée.

2. Procédé selon la revendication 1, **caractérisé en ce que,** dans l'étape de mesure (12), des boues des eaux usées (22) avec une teneur en matière sèche d'au moins 10 % sont répandues sur la zone dégradée puis, dans l'étape de mélange (13), les déchets organiques de type biologique contenant les boues des eaux usées (22) sont mélangés dans la matière structurelle (24) de la zone dégradée.

3. Procédé selon la revendication 2, **caractérisé en ce que,** dans l'étape de mélange (13), les matières de base sont mélangées dans une direction verticale de préférence vers le bas à une profondeur de 2 mètres.

4. Procédé selon la revendication 1, **caractérisé par** l'utilisation d'au moins un lit de mélange (28) sur la zone dégradée et, dans l'étape de mesure (12), les matières de base du substitut de sol (20) sont mesurées dans le lit de mélange (28) couche par couche puis, dans l'étape de mélange (13), les matières de base mesurées sont mélangées à la profondeur complète du lit de mélange (28) .

5. Procédé selon la revendication 4, **caractérisé en ce qu'**au moins deux lits de mélange (28) sont utilisés, et les lits de mélange (28) sont agencés côte à côte.

6. Procédé selon la revendication 4 ou 5, **caractérisé en ce que,** dans l'étape de mélange (13), un mélange vertical est appliqué pour créer le substitut de sol (20) à une profondeur de jusqu'à 5 mètres.

7. Procédé selon l'une des revendications 1 à 6, **caractérisé en ce que,** dans l'étape de mesure (12), au moins une matière de base du substitut de sol (20) est prétraitée et, pendant ce prétraitement, l'au moins une matière de base est prémélangée dans un doseur volumétrique (36).

8. Procédé selon la revendication 7, **caractérisé en ce qu'**un mélangeur (44), de préférence un mélangeur à deux essieux (44), est couplé à la sortie du doseur volumétrique (36) et la matière de base du substitut de sol (20) est en outre mélangée par le mélangeur (44).

9. Procédé selon l'une des revendications 1 à 8, **caractérisé en ce que** l'étape de mélange (13) est réalisée par une tête de mélange orientée verticalement vers le bas et rotative (26) couplée à un bras de fonctionnement (33) d'un engin de terrassement (32).

10. Procédé selon la revendication 1, **caractérisé en ce que,** dans l'étape de mesure (12), des boues des eaux usées liquides (22) avec une teneur en matière sèche de jusqu'à 10 % sont mesurées dans un équipement d'alimentation (30) puis, dans l'étape de mélange (13), la matière structurelle (24) de la zone dégradée est déliée au moyen d'une tête de mélange orientée verticalement vers le bas et rotative (26) couplée à un bras de fonctionnement (33) d'un engin de terrassement (32), les boues des eaux usées liquides (22) sont transférées de l'équipement d'alimentation (30) à travers ou à la tête de mélange (26) au niveau de laquelle les boues des eaux usées liquides (22) sont mélangées avec la matière structurelle déliée (24).

11. Procédé selon la revendication 10, **caractérisé en ce que,** dans l'étape de mélange (13), un substitut de sol (20) d'une profondeur de jusqu'à 5 mètres est créé par un mélange vertical.

12. Procédé selon l'une des revendications 1 à 11, **caractérisé pa**r la croissance d'une végétation sur le substitut de sol (20) créé par l'utilisation d'au moins l'une des espèces suivantes :
- ormes de Sibérie (*Ulmus pumila*)*,*
- ormes champêtres (anglais) (*Ulmus minor*)*,*
- clones de peupliers canadiens (*Populus* × *euramericana*)*,*
- clones de saules (*Salix spp*.),
- frênes communs (*Fraxinus excelsior*)*,*
- acacias (*Robinia pseudoacacia*),
- érables champêtres (*Acer campestre*),
- oliviers de Bohême (*Elaeagnus angustifolia*)*,*
- clones de Paulownia (*Paulownia sp*.)*,*
- mauves de Virginie (*Sida hermaphrodite L. Rusby*)*,*
- roseaux de Chine géants (*Miscanthus giganteus*).
